# EUROPÄISCHE PATENTANMELDUNG

(11) **EP 0 652 267 A2**
(43) Veröffentlichungstag der Anmeldung: **10.05.1995**
(21) Anmeldenummer: 94116137.4
(22) Anmeldetag: 13.10.1994
(51) Int. Cl.: C09D 11/02, B32B 17/10, B32B 17/00

(54) **Farbpaste zur Herstellung innenbedruckter Verbundglasscheiben**

(30) Priorität: 05.11.1993 DE 4337826
(71) Anmelder: CERDEC AKTIENGESELLSCHAFT KERAMISCHE FARBEN, D-60327 Frankfurt (DE)
(72) Erfinder: Huber, Adalbert, Dr., D-63225 Langen (DE)

(57) **Zusammenfassung**

Die Erfindung betrifft eine Farbpaste zur Herstellung innenbedruckter gekrümmter Verbundglasscheiben.

Vorbekannte Farbpasten bereiten beim Brand innenbedruckter Verbundglasscheiben Probleme bezüglich Haftung und optischer Fehlerfreiheit oder erfordern einen hohen technischen Aufwand.

Erfindungsgemäße Farbpasten, welche die bisherigen Nachteile überwinden, sind gekennzeichnet durch ein Druckmedium, das außer Lösungsmitteln 5,6,8-Trihydroxy-1,4-naphthochinon enthält.

## Beschreibung

Die Erfindung betrifft eine Farbpaste zur Herstellung innenbedruckter gekrümmter Verbundglasscheiben, wie sie insbesondere für Kraftfahrzeuge verwenden werden. Weitere Gegenstände der Erfindung betreffen ein Druckmedium, das in der Farbpaste enthalten ist, sowie die Verwendung der Farbpaste zur Herstellung innenbedruckter gekrümmter Verbundglasscheiben.

Verbundglasscheiben, insbesondere solche für Automobile, bestehen aus zwei Glasscheiben, nämlich einer Innenscheibe und einer Außenscheibe und einer dazwischen angeordneten Kunststoffolie, etwa einer solchen aus Polyvinylbutyrat. Insbesondere für die Front- und Heckscheibe von Kraftfahrzeugen kommen einfach gekrümmte oder doppelt gekrümmte Verbundglasscheiben zum Einsatz. Auf mindestens einer der Scheiben ist an dafür vorgesehenen Stellen eine Farbschicht in Form eines Emails aufgebracht. Diese Farbschicht soll Klebestellen oder innere Bauteile des Fahrzeugs, darunter Anschlüsse von Antennen und Scheibenheizungen abdecken. Von der Farbschicht wird gefordert, daß sie ausreichend konturenscharf und deckend ist und den gewünschten Farbton aufweist. Die Farbschicht muß die Lebensdauer der Verbundglasscheibe überdauern; sie darf sich weder verändern noch von der Glasscheibe lösen.

Zur Herstellung der Farbschicht wird in an sich bekannter Weise eine Farbpaste auf die dafür vorgesehenen Stellen einer Scheibe aufgedruckt und in geeigneter Weise eingebrannt. Die Farbpaste setzt sich im wesentlichen aus farbgebenden anorganischen Bestandteilen, wie anorganischen Pigmenten und/oder Farbfritten, einem Glasfluß, wobei es sich auch um ein Gemisch mehrerer Glasflüsse handeln kann, und einem Medium, das im Hinblick auf die gängigste Anwendungsart meist als Druckmedium bezeichnet wird, zusammen. Übliche Druckmedien bestehen im wesentlichen aus einem oder mehreren Lösungsmitteln, einem polymeren organischen Bindemittel und diversen Verarbeitungshilfsstoffen. Der Glasfluß dient der Fixierung der farbgebenden Komponenten auf der zu dekorierenden Oberfläche. Glasfluß, farbgebende Komponenten und Druckmedium werden in einer solchen Menge intensiv miteinander homogenisiert, daß eine druckfähige und gut einbrennbare Paste resultiert; die Anwendung der Farbpaste zur Herstellung innenbedruckter Verbundglasscheiben erfolgt zumeist im Siebdruck. Nach dem Druck wird das Lösemittel in einem Trocknungsprozeß entfernt; daran anschließend lassen sich weitere Drucke aufbringen, beispielsweise ein solcher unter Verwendung von sogenannten Silberpasten zur Erzeugung elektrischer Leiterbahnen. An den Trocknungsprozeß schließt sich der Brand in einem Brennofen an, wo organische Bestandteile der Farbpaste verbrannt und die verglasenden Bestandteile ausgeschmolzen werden und dabei das Pigment auf dem Glas fixieren.

Bei der Herstellung von gekrümmten Verbundglasscheiben werden die Innen- und die Außenscheibe aufeinander gelegt, auf Verformungstemperatur erwärmt und das Pärchen unter Verwendung einer Biegeschablone gekrümmt. Die gekrümmten Scheiben des Pärchens werden voneinander getrennt und nach Einlage einer Kunststoffolie unter Erwärmung zusammengepreßt. Das geschilderte Verfahren läßt sich ohne zusätzliche Maßnahmen nicht befriedigend durchführen, wenn eine der Glasscheiben mit einer Emailfarbe beschichtet wurde.

Die JP-A 62-72548 richtet sich auf ein Verfahren zur Herstellung innenbedruckter gekrümmter Verbundglasscheiben: Nach dem Bedrucken einer Glasscheibe mit einer üblichen Emailpaste wird das Lösemittel durch Trocknen entfernt und anschließend die so dekorierte Glasscheibe ohne Verformung bei Einbrenntemperaturen um 550 °C gebrannt, bis kein Kohlenstoff mehr in der Farbe ist. Anschließend wird die zweite Scheibe auf die bedruckte Scheibe aufgelegt und das Pärchen im Ofen bei einer Verformungstemperatur oberhalb 550 ° bis etwa 650 °C gekrümmt. Der Nachteil dieses Verfahrens ist, daß durch das Vorbrennen im Glas optische Störungen entstehen können und ein zweimaliges Brennen erhebliche Kosten verursacht. Verzichtet man dagegen auf den Brand der bedruckten ersten Scheibe und brennt unmittelbar das innenbedruckte Pärchen, kann der zur Verbrennung der Bindemittel erforderliche Sauerstoff nicht mehr in ausreichender Menge an das Email herangeführt werden, so daß reduktiver Kohlenstoff entsteht, der Metalloxide in der Emailfarbe reduziert und so zu einer mangelhaften Haftung des Emails auf dem Glas und außerdem zu einer nicht gewünschten Verfärbung des Emails führt.

In der EP-A 0 535 474 wird der vorgenannte Nachteil dadurch umgangen, daß eine spezielle Emailfarbe verwendet wird. Diese Emailfarbe enthält ein anorganisches Bindemittel aus der Reihe der Kieselsäureester und vorzugsweise zusätzlich anorganische Sauerstoffspender, wie Bleidioxid und Mangandioxid. Die bedruckte Scheibe wird bei Temperaturen um 300 °C getrocknet; anschließend wird das Email im Pärchenverbund bei gleichzeitiger Verformung der Verbundglasscheiben eingebrannt. Der Nachteil dieses Verfahrens ist, daß die zu verwendende Farbpaste nur eine geringe Lagerstabilität aufweist und zudem nach dem Bedrucken ein Trocknungsschritt bei einer Temperatur um üblicherweise 250 °C erforderlich ist.

Aufgabe der Erfindung ist es demgemäß eine keramische Farbpaste zur Verfügung zu stellen, welche ausreichend lagerstabil ist, keine aufwendige Vortrocknung der bedruckten Scheibe erforderlich macht und während der Verformung des Pärchenverbunds eingebrannt werden kann.

Gefunden wurde eine Farbpaste zur Herstellung innenbedruckter gekrümmter Verbundglasscheiben, enthaltend ein Glasfluß, farbgebende anorganische Bestandteile aus der Reihe einbrennstabiler Pigmente und/oder Farbfritten und ein organisches Lösungsmittel enthaltendes Druckmedium, dadurch gekennzeichnet, daß das Druckmedium 5,6,8-Trihydroxy-1,4-naphthochinon in einer Menge von 5 bis 70 Gew.-% enthält.

Die Farbpaste enthält im wesentlichen 40 bis 90 Gew.-% Glasfluß, wobei es sich auch um ein Gemisch mehrerer Glasflüsse handeln kann, 5 bis 60 Gew.-%, insbesondere 15 bis 40 Gew.-%, eines oder mehrerer Pigmente und 5 bis 60 Gew.-% Druckmedium und weist eine druckfähige Konsistenz auf. Druckfähig bedeutet hierbei, daß sich die Farbpaste problemlos mittels üblicher Siebdrucktechniken anwenden läßt. Außer den vorgenannten Hauptbestandteilen kann die Farbpaste in geringer Menge, im allgemeinen weniger als insgesamt 5 Gew.-%, übliche Verarbeitungshilfsstoffe, etwa Viskositätsregulatoren, enthalten. Das optimale Mischungsverhältnis der Bestandteile der Farbpaste wird der Fachmann in Abhängigkeit von den gewünschten Farbeigenschaften und Gebrauchseigenschaften der bedruckten Glasscheibe einstellen.

Als Glasfluß kommen insbesondere Glasfritten zum Einsatz; es werden vorzugsweise solche Fritten verwenden, welche bei der Temperatur der Verformung der Verbundglasscheibe, also zwischen etwa 500 und 700 °C, einbrennfähig sind. Bei den Glasfritten kann es sich ganz oder teilweise auch um sogenannte Farbfritten handeln, das heißt, solche, welche färbende Bestandteile enthalten. Als Pigmente kommen übliche anorganische Pigmente, welche unter den Einbrennbedingungen stabil sind, zum Einsatz.

Das in der Farbpaste enthaltene Druckmedium enthält den erfindungswesentlichen Bestandteil, nämlich das 5,6,8-Trihydroxy-1,4-naphthochinon, in einer Menge zwischen 5 und 70 Gew.-%, vorzugsweise zwischen 10 und 50 Gew.-% und insbesondere zwischen 15 und 50 Gew.-%. Ferner enthält das Druckmedium ein oder mehrere organische Lösungsmittel in einer Menge zwischen 40 und 90 Gew.-%, vorzugsweise zwischen 50 und 80 Gew.-%. Bei den organischen Lösungsmitteln handelt es sich um ausreichend polare Lösungsmittel, welche in der Lage sind, das 5,6,8-Trihydroxy-1,4-naphthochinon in der erforderlichen Menge klar zu lösen. Geeignet sind beispielsweise Lösungsmittel aus der Reihe aromatischer Kohlenwasserstoffe, Ester, Glykole, Glykolether, Glykolester und cycloaliphatische Alkohole, wie insbesondere Terpenalkohole; gut geeignet sind auch Glykoletheracetate, wie beispielsweise Monobuthyläthermonoacetat. Das Druckmedium kann zusätzlich zu dem Lösungsmittel und dem erfindungsgemäßen Naphthochinon bis zu 5 Gew.-%, vorzugsweise bis zu 3 Gew.-%, eines oder mehrerer polymerer organischer Bindemittel enthalten. Die polymeren Bindemittel dienen der Erhöhung der Griffestigkeit des noch nicht eingebrannten Emails. Geeignete Bindemittel können ausgewählt werden aus der Reihe der Polyacrylate, Polymethacrylate, Celluloseether und Celluloseester, Polyvinylbutyrat sowie Alkydharze und Urethanharze. Sofern ein polymeres Bindemittel anwesend ist, liegt sein Gehalt im Druckmedium im allgemeinen zwischen 0,1 und 3 Gew.-%, vorzugsweise zwischen 0,1 und 2 Gew.-%.

Es wurde gefunden, daß das erfindungswesentliche 5,6,8-Trihydroxy-1,4-naphthochinon in Gegenwart eines Lösungsmittels ein zur Herstellung von Farbpasten gut geeignetes Druckmedium bildet. Das genannte Naphthochinon zeichnet sich dadurch aus, daß es sich sowohl unter Luft als auch unter inerter Atmosphäre bis etwa 290 °C verflüchtigt, wobei nicht ausgeschlossen wird, daß diese Verflüchtigung mit einer Zersetzung gekoppelt ist. Überraschenderweise übt das genannte Naphthochinon eine ausreichende Bindemittel- und/oder Antisetimentationswirkung aus, so daß die damit hergestellten Farbpasten lagerstabil sind. Die leichte Verflüchtigung, welche auch in Abwesenheit von Sauerstoff möglich ist, macht diesen Stoff besonders geeignet als wesentliche Komponente in den erfindungsgemäßen Farbpasten und Druckmedien. Da zur Verflüchtigung des genannten Naphthochinons kein Sauerstoff erforderlich ist, entfallen bei Verwendung erfindungsgemäßer Farbpasten und Druckmedien auch die bisher bekannten Probleme, welche beim Brand innenbedruckter Verbundglasscheiben auftraten. Im Gegensatz zu vorbekannten Farbpasten kommt es bei Verwendung der erfindungsgemäßen Farbpasten zu einem problemlosen Ausbrand, wobei keine Verfärbung festzustellen ist, keine Riß- und Lochbildung auftritt und eine gute Haftung auf der Glasscheibe erzielt wird.

Ein weiterer besonderer Vorteil erfindungsgemäßer Farbpasten besteht darin, daß die mit dieser Farbpaste bedruckte Glasscheibe unter üblichen Produktionsbedingungen getrocknet werden kann, also bei einer Temperatur von im allgemeinen unter 150 °C.

### Beispiel 1

### Herstellung der Druckmedien

Lösungsmittel und 5,6,8-Trihydroxy-1,4-naphthochinon (THNQ) werden gemischt, wobei sich letzteres löst. Soweit Bindemittel eingesetzt werden, wurden diese vor der Zugabe des THNQ im Lösungsmittel gelöst. Die Zusammensetzung der Druckmedien ist der Tabelle zu entnehmen. (Angaben in Gew.-%).

| | A | B | C | D | E |
|---|---|---|---|---|---|
| THNQ | 50 | 30 | 20 | 19 | 19,5 |
| Butylcarbitolacetat | 50 | 70 | 80 | | |
| Pineöl | | | | 80 | 80 |
| Ethylcellulose | | | | 1,0 | |
| Polymethylmethacrylat | | | | | 0,5 |

### Beispiele 2 bis 6

Farbpasten: Die Herstellung erfolgt in bekannter Weise auf einem Dreiwalzenstuhl. Eingesetzt wurde als Glasfritte ein Bleiborsilikat, als Pigment ein Kupfer-Chromspinell); die Farbfritte enthielt als färbende Oxide Fe₂O₃, MnO, CoO. Die Zusammensetzung (in Gew.-%) folgt aus der Tabelle.

| Bestandteile | Beispiel Nr. | | | | |
|---|---|---|---|---|---|
| | 2 | 3 | 4 | 5 | 6 |
| Medium 1 A | 15 | | | | |
| Medium 1 B | | 19 | | | |
| Medium 1 C | | | 15 | | |
| Medium 1 D | | | | 15 | |
| Medium 1 E | | | | | 15 |
| Pigment | 21 | 41 | 25 | 30 | 35 |
| Glasfritte | 64 | 40 | 60 | | 50 |
| Farbfritte | | | | 55 | |

Die Farbpasten wurden mittels Siebdruck gedruckt; das Lösungsmittel wurde bei 135 °C abgedunstet. Nach Auflage der in bekanner Weise mit einem Trennmittel versehenen (Natriumsulfat) zweiten Scheibe wurde der Scheibenverbund bei 610 °C gebrannt. Keines der Farbemails zeigte Blasenbildung, Löcher oder Risse oder optische/farbliche Störungen; alle zeigten gute Haftfestigkeit und ausreichende Griffestigkeit.

## Patentansprüche

1. Farbpaste zur Herstellung innenbedruckter gekrümmter Verbundglasscheiben, enthaltend einen Glasfluß, farbgebende anorganische Bestandteile aus der Reihe einbrennstabiler Pigmente und/oder Farbfritten und ein organisches Lösungsmittel enthaltendes Druckmedium,
dadurch gekennzeichnet,
daß das Druckmedium 5,6,8-Trihydroxy-1,4-naphthochinon in einer Menge von 5 bis 70 Gew.-% enthält.

2. Farbpaste nach Anspruch 1,
dadurch gekennzeichnet,
daß sie im wesentlichen 40 bis 90 Gew.-% Glasfluß, 5 bis 60 Gew.-% Pigmente und 5 bis 60 Gew.-% Druckmedium enthält und eine druckfähige Konsistenz aufweist.

3. Farbpaste nach Anspruch 1 oder 2,
dadurch gekennzeichnet,
daß das Druckmedium 10 bis 60 Gew.-% 5,6,8-Trihydroxy-1,4-naphthochinon, 40 bis 90 Gew.-% eines oder mehrerer organischer Lösungsmittel und 0 bis 5 Gew.-% eines polymeren organischen Bindemittels enthält.

4. Farbpaste nach einem der Ansprüche 1 bis 3,
dadruch gekennzeichnet,
daß das Lösungsmittel des Druckmediums ausgewählt ist aus der Reihe der Terpenalkohole und/oder der Glykoletheracetate.

5. Farbpaste nach einem der Ansprüche 1 bis 4,
dadurch gekennzeichnet,
daß das Druckmedium 0,1 bis 3 Gew-% eines oder mehrere Bindemittel aus der Reihe der Polyacrylate und -methacrylate, Cellulosederivate und Polyvinylbutyrate enthält.

6. Druckmedium zur Herstellung einer Farbpaste gemäß einem der Ansprüche 1 bis 5, enthaltend ein organisches Lösungsmittel,
dadurch gekennzeichnet,
daß es zusätzlich 5,6,8-Trihydroxy-1,4-naphthochinon in einer Menge von 5 bis 70 Gew.-% enthält.

7. Druckmedium nach Anspruch 6,
dadurch gekennzeichnet,
daß es im wesentlichen aus 10 bis 60 Gew.-% 5,6,8-Trihydroxy-1,4-naphthochinon, 40 bis 90 Gew.-% eines oder mehrerer organischer Lösungsmittel für das 5,6,8-Trihydroxy-1,4-naphthochinon und 0 bis 5 Gew.-% eines oder mehrerer polymerer organischer Bindemittel besteht.

8. Verwendung einer Farbpaste gemäß Anspruch 1 bis 5 zur Herstellung innenbedruckter gekrümmter Verbundglasscheiben.
